# EUROPÄISCHE PATENTSCHRIFT

(11) **EP 1 669 266 B1**
(45) Veröffentlichungstag und Bekanntmachung des Hinweises auf die Patenterteilung: **03.10.2007**
(21) Anmeldenummer: 05024788.1
(22) Anmeldetag: 14.11.2005
(51) Int. Cl.: B60S 9/04

(54) **Höhenverstellbare Stütze für Sattelanhänger oder dergleichen**
Height adjustable support for semitrailers or the like
Support reglable en hauter pour semi-remorque ou systeme similaire

(30) Priorität: 07.12.2004 DE 202004018874 U; 01.02.2005 DE 202005002082 U
(43) Veröffentlichungstag der Anmeldung: 14.06.2006
(73) Patentinhaber: Georg Fischer Verkehrstechnik GmbH, 78224 Singen (DE)
(72) Erfinder: Riedl, Reinhold, 63897 Miltenberg (DE)
(74) Vertreter: Weiss, Wolfgang

(56) Entgegenhaltungen:
- EP-B- 0 886 592
- US-A- 5 137 301

## Beschreibung

Die Erfindung bezieht sich auf eine höhenverstellbare Stütze für Sattelanhänger oder dergleichen gemäß dem Oberbegriff des Anspruchs 1.

Derartige Stützen sind, in meist paarweiser Anordnung, im vorderen Bereich des Sattelaufliegers angeordnet. Am unteren Ende der ausfahrbaren Stützeninnenrohre befindet sich jeweils ein Stützfuß mit einer Fußplatte, auf der sich mindestens ein Rollelement abwälzt. Die Stützen kommen immer dann zum Einsatz, wenn der Sattelanhänger getrennt vom Sattelschlepper abgestellt wird. Bei den heute vorherrschenden Sattelanhängern mit luftgefederten Achsen kann es während längerer Standzeiten, hervorgerufen durch Druckverluste in den Luftfederbälgen, zum Absinken des Axbereichs kommen. Dabei entsteht, bei in der Regel während der Abstellung gebremstem Achsaggregat, vorwärts ein Längsschub am Sattelanhänger, dem die Stützenfußplatten, wegen der Bodenhaftung nicht zu folgen in der Lage sind. Die Stützen mit starren Fußplatten wären in dieser Situation einer hohen Biege- und Knickbeanspruchung ausgesetzt die zu ihrer Beschädigung führen könnte. Um diese zu vermeiden, wirken die besagten Rollelemente auf den Fußplatten schubausgleichend, d.h. die Stützen bewegen sich durch Abrollen der Rollelemente aus der mittigen Stellung auf der Fußplatte vorwärts. Wenn beim Aufsatteln des Sattelanhängers die Belastung der Stützen wieder aufgehoben wird, sorgen Federelemente dafür, daß die Fußplatten wieder in Mittelstellung, d.h. symmetrisch zur jeweiligen Stützenachse zurückgestellt werden.

Eine gattungsgemäße Stütze ist aus der EP 0 886 592 B1 bekannt, wobei im Fußbereich ein Rollelement vorgesehen ist und der Befestigung und der Rückstellung der Fußplatte dienende Drahtseile und Druckfedern vorgeschlagen werden. Eine solche Ausgestaltung ist vielteilig. Und für die Fußplatte ist dabei keine weitere Anhängung vorhanden.

Der DE 40 03 414 C2 ist der Stützfuß einer so genannten Teleskop-Stützvorrichtung für Sattelanhänger, der ein Rollsegment als Ausschnitt eines Hohlzylinders mit einem teilzylindrischen Mantel als Rollfläche, wobei der Mantel sich in Umfangrichtung erstreckenden Schlitze aufweist, durch die Schraubenfedern hindurchgeführt sind, von denen die eine einerseits vorn an der Fußplatte und anderseits vorn am Stützenrohr und die andere einerseits hinten an der Fußplatte und andererseits hinten am Stützrohr befestigt ist. Die Schraubenfedern sind in Richtung Stirnseite mittig zu der Fußplatte freiliegend angeordnet und daher permanent ungeschützt der Witterung ausgesetzt, was zu Korrosionsschäden führen und Funktionsstörungen bewirken kann. Die Breite des Rollsegments überschreitet dabei die Stützenbreite und wegen der ungünstig großen Höhe dieses Stützfußes sowie der Anordnung seiner Schwenkachse, notwendigerweise am untersten Endbereich des Stützeninnenrohres, ergibt sich eine nachteilige große Bauhöhe einer so ausgerüsteten Sattelanhängerstütze. Außerdem ist dieser Stützfuß nur in einer Ebene schwenkbeweglich und kann sich in Querrichtung nicht etwaigen Bodenunebenheiten angleichen, was bei unebenen Abstellflächen zur Materialüberbeanspruchung führen kann. Außerdem könnte ein solcher Fuß nach Lösen seiner Aufhängung komplett verloren gehen.

Der Erfindung liegt daher die Aufgabe zugrunde, eine höhenverstellbare Stütze der eingangs bezeichneten Bauart zu schaffen, deren Fußbereich unter Beibehaltung einer geringstmöglichen Bauhöhe mit witterungsgeschützt angeordneten Rückstellelementen, eine abgesicherte Aufhängung der Fußplatte aufweist und weniger baulichen Aufwand bedingt.

Erfindungsgemäß ist die Aufgabe dadurch gelöst, daß die Fußplatte an Zugfedern hängt, welche in zwei parallelen, jeweils zwischen der Spurrolle und der Wandung des Stützeninnenrohres liegenden Ebenen, angeordnet sind und mit jeweils einer Öse im Stützeninnenrohr und der anderen Öse nahe der Querachse an der Fußplatte befestigt ist, und daß die Fußplatte mittels einer nicht permanent im Eingriff befindlichen Halteeinrichtung mit dem Stützeninnerohr korrespondiert.

Diese Lösung hat den Vorteil, daß sich die Zugfedern in der Grundstellung der Stütze. d.h. sowohl während des Transports als auch abgestellt, in ruhender Stützfunktion, schmutz- und witterungsgeschützt gänzlich innerhalb des Stützeninnenrohres befinden und lediglich während eines Schubausgleichs der Stütze nur teilweise freiliegen. Vorteilhafter Weise ist die Halteeinrichtung zwischen der Fußplatte und dem Stützeninnenrohr so ausgebildet, daß sie im Regelfall außer Eingriff ist. Daher ist die Fußplatte sowohl um ihre Querachse als auch um ihre Längsachse ausreichend schwenkbeweglich. Für diese allseitige Schwenkbeweglichkeit mit der dadurch vorteilhafter Weise bestehenden Anpassungsmöglichkeit der Fußplatte an schrägen Boden ist auch durch den Einbau einer Spurrolle, mit vorzugsweise querschnittsmäßig kreisbogenförmiger konkaver Spurrille, in das Stützeninnenrohr und eine zur Spurrille der Spurrolle komplementär konvex ausgebildeten Rollspur auf der Fußplatte gesorgt. Im Gegensatz zu einem Stab, der herkömmlicher Weise ein Rollsegment und die Seitenwände des Fußelements durchdringt und somit durch Verkanten eine Bodenanpassung des Fußelements u.a. vereitelt, besteht bei der vorgeschlagenen Halteeinrichtung auch bei ausreichend quergeschwenkter Fußplatte volle Berührungslosigkeit zu anderen Teilen. Die Halteeinrichtung kommt erst zur Wirkung, wenn die Zugfedern zufällig gleichzeitig brechen sollten und bewirkt dann eine sichere Verhakung der Fußlatte mit dem Stützeninnenrohr, so daß die Fußplatte nicht verloren gehen kann.

Es ist vorteilhaft wenn am Stützeninnenrohr als paarweise untere Fortsätze mittensymmetrische Anschläge angeordnet werden, die gegenüber der linken und der rechten Außenfläche des Stützeninnenrohres jeweils eingerückte Anschlagflächen aufweisen, die bei maximalem Schubausgleich gegen Stopper, die sich auf der Fußplatte befindden auftreffen. Aufgrund der eingerückten Anschlagflächen kann nämlich günstiger Weise die Länge der Fußplatte kurz gehalten werden.

Wenn ein Befestigungs-/Verriegelungsaufsatz vorgesehen wird, der im Stützeninnenrohr auf der Achse der Spurrolle sitzend, sowohl der Federnbefestigung als auch der axialen Fixierung der Achse dient, ist günstiger Weise eine Vormontage der Baugruppe des Stützenfußbereichs möglich. Und es entfällt außerdem der Aufwand für eine separate Absicherung der Achse gegen ein Herauswandern.

Schließlich ist es von Vorteil im Stützeninnenrohr Umlenkkufen vorzusehen, welche die Zugfedern, die beim Schubausgleich der Stütze ausgezogen werden, schonend umlenken. Vorteilhafter Weise ergeben sich außerdem durch die dabei entstehenden Umlenkwinkel während der Rückstellung der Fußplatte durch die Zugfedern günstige Federkraftkomponenten. Besonders kostengünstig ist es, die Umlenkkufen durch eine entsprechende Formprägung der in den Zugfedernbereichen liegenden Wandpartien des Stützeninnenrohres zu erzeugen, d.h. zu prägen.

Die Erfindung und ihre Weiterbildungen werden anhand von Zeichnungen bevorzugter Ausführungsbeispiele beschrieben.

Es zeigen:
**Fig.** 1 eine Seitenansicht vom unteren Teil einer Stütze mit eingefahrenem Stützeninnenrohr (Transportstellung),
**Fig.** 2 eine Vorderansicht teils geschnitten nach Fig.1 jedoch im ausgefahrenem Stützeninnenrohr (Arbeitsstellung),
**Fig.** 3 eine Seitenansicht wie Fig.1 wobei sich die Stütze in maximaler Ausgleichsstellung gegenüber der Mitte der Fußplatte befindet.
**Fig.** 4 eine Vorderansicht teils geschnitten wie Fig.2 jedoch in anderer Ausgestaltung und
**Fig.** 5 eine Seitenansicht nach Fig.4.

Die paarweise an der vorderen Unterseite und symmetrisch zur Längsachse des hier nicht gezeigten Sattelanhängers angeordneten Stützen **10** weisen jeweils ein vertikales mit dem Sattelaufliegerrahmen verbundenes Stützenaußenrohr **11** und ein in diesem verschiebbar angeordnetetes Stützeninnenrohr **12** auf, deren Querschnitte in der Regel quadratisch sind. Das Stützenrohr **12** ist mechanisch aus- und einfahrbar, d.h. durch Ausfahren von der Transportstellung in die Arbeitsstellung, oder durch Einfahren von der Arbeitsstellung in die Transportstellung bringbar.

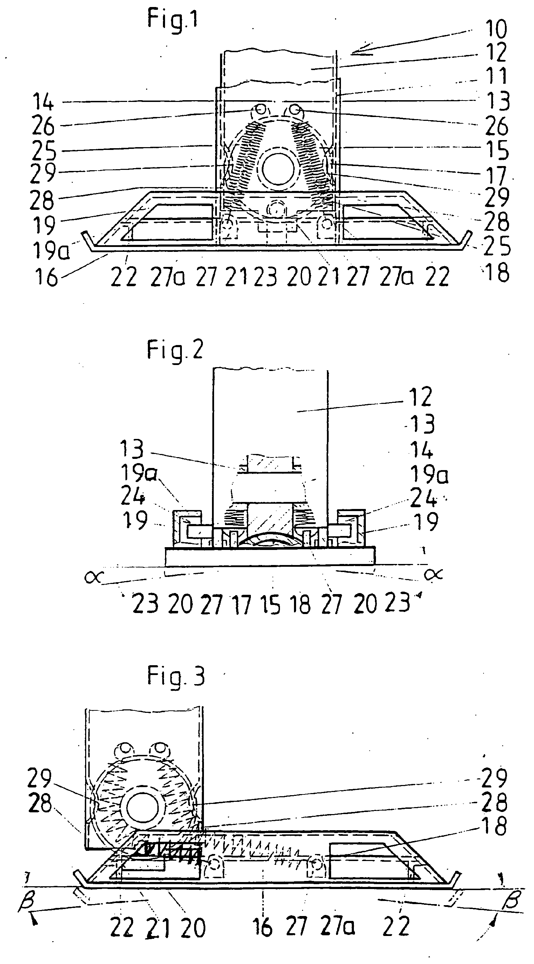

Im unteren Endbereich des Stützeninnenrohres **12** sind, in Blickrichtung auf **Fig.1,** d.h. quer zur Fahrtrichtung des Sattelanhängers, zwei beabstandete fluchtende Lagergehäuse **13** befestigt, in denen eine zylindrische Achse **14** fixiert ist. Auf der Achse **14** ist eine Spurrolle **15** drehbar gelagert die bei ausgefahrenem Stützeninnenrohr **12** den Lastdruck auf eine am Erdboden aufliegende Fußplatte **16** überträgt und sich auf dieser abrollen kann. Zu diesem Zweck besitzt die Spurrolle **15** am Umfang eine im Querschnitt kreisbogenförmige konkave Spurrille **17** und die Fußplatte **16** weist eine zur Spurrille **17** komplementäre konvex ausgebildete Rollspur **18** auf, welche die Spurrolle **15** zugleich führt. Die Fußplatte **16** besitzt auf ihrer Oberseite außer der zentrisch in Längsrichtung verlaufenden erhabenen Rollspur **18** zwei daneben spiegelbildlich angeordnete parallele Verstärkungsrippen **19.** Die Verstärkungsrippen **19** bestehen jeweils aus einem vertikalen Stegbereich und einem darauf angeordneten Tragrand **19a** der zur Mitte der Fußplatte **16** weist. Das Stützeninnenrohr **12** hat an seinem unteren Ende ein Paar mittensymetrische Fortsätze **20,** die gegenüber der linken und der rechten Außenfläche des Stützeninnenrohres **12** jeweils eingerückte Anschlagflächen **21** aufweisen, welche bei maximalem Ausgleichsweg der Stütze an, auf der Fußplatte **16** sitzende Stopper **22** anschlagen und den Ausgleichsweg begrenzen. Außerdem befinden sich am Stützeninnenrohr **12** zwei auf den Seiten an denen die Fortsätze **20** angeordnet sind gegenüberliegende, nach außen und unter den jeweiligen Tragrand **19a** der Verstärkungsrippe **19** weisende Haltezapfen **23.** Die Tragränder **19a** der Verstärkungsrippen **19** und Haltezapfen **23** bilden eine später beschriebene Halteeinrichtung **24.** Die Haltezapfen **23** sind im Regelfall von den Verstärkungsrippen **19** und der Fußplatte **16** beabstandet, so daß die Fußplatte **16** sowohl um ihre Längsachse, z.B. im Winkel α, als auch um ihre Querachse, z.B. im Winkel β, schwenkbeweglich ist und sich den Bodenunebenheiten anpassen kann. In zwei paralellen Ebenen, jeweils zwischen einer Seite der Spurrolle **15** und den gegenüberliegenden Wänden des Stützeninnenrohres **12** befinden sich Zugfedern **25.** Die Zugfedern **25** sind jeweils mit der oberen Öse an einer Halterung **26** im Stützeninnenrohr **12** und mit ihrer unteren Öse unmittelbar unterhalb des Stützeninnenrohres **12** an einer Halte-/Einführlasche **27,** die auf der Fußplatte **16** sitzt, befestigt. Bei eingefahrenem Stützeninnenrohr pressen die vorge-spannten Zugfedern **25** die Fußplatte **16** zunächst günstiger Weise starr, d.h. nicht schwenkbar in der Transportstellung gegen den unteren Rand des Stützenaußenrohres **12** und dann, während des Aus- und Einfahrens des Stützeninnenrohres **12,** schwenkbeweglich gegen die Spurrolle **15.**

Wenn die Stütze **10** mit ihrer Fußplatte **16** auf dem Boden aufstehend, neben ihrer Stützfunktion, beim Absinken des hinteren Teils des Sattelanhängers gezwungen wird nach vorn - in **Fig.** 1 nach links - auszuwandern, rollt sich die Spurrolle **15** auf der Fußplatte **16** ab, wobei die Zugfedern **24** stärker spannt wrden. Die Zugfedern **24** werden dabei schonend umgelenkt. Das geschieht einerseits über Umlenkkufen **29,** die über am unteren Rand des Stützeninnenrohres **12** befindlichen, Aussparungen **28** angeordnet sind und andererseits an zylindrischen Bereichen der Lagergehäuse **13.** Die Umlenkkufen **29** sind in die Wandbereiche des Stützeninnenrohres eingeprägt.

Beim späteren Aufsatteln des Sattelanhängers wird zu Beginn des Einfahrens des Stützeninnenrohres **12** und dem dabei erfolgenden Abheben vom Boden die Fußplatte **16** von den Zugfedern **25** in ihre Ausgangsstellung gemäß **Fig.1** zurückgezogen. Gegen Ende des Einfahrhubs des Stützeninnenrohres **12** bewirken die mit Einführfasen **27a** versehenen Halte-/Einführlaschen **27,** deren äußerer Abstand in den Einbauebenen der Zugfedern **25** nur wenig kleiner als die lichte Weite des Stützenaußenrohres **11** ist, eine symmetrische Feinausrichtung der Fußplatte **16** zum Stützenaußenrohr **11,** wenn die Transportstellung erreicht wird. Bei einem gleichzeitigen Bruch der Zugfedern **25** wird sicherheitshalber die Halteeinrichtung **24** wirksam. Die Tragränder **19a** der Verstärkungsrippen **19** und die Haltezapfen **23** am Stützeninnenrohr **12** verhaken sich dann, damit die Fußplatte **16** nicht verloren geht, sondern am Stützeninnenrohr **12** hängen bleibt.

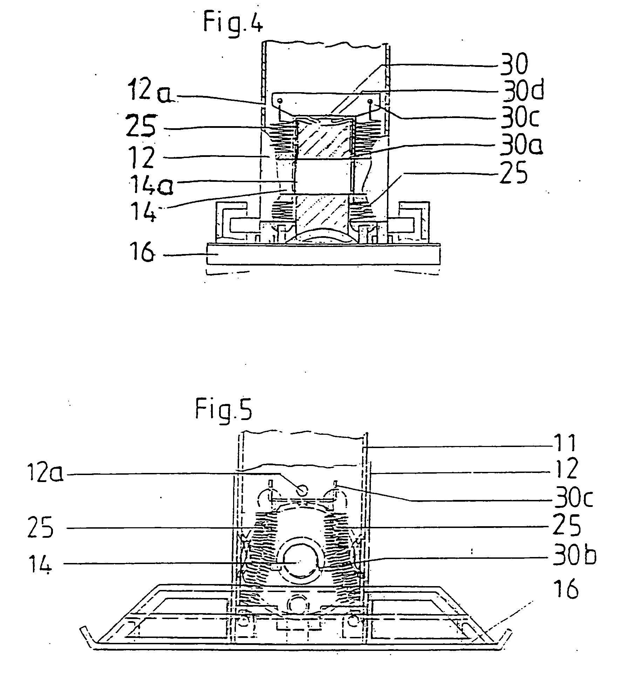

**Fig.4** und 5 zeigen eine Ausgestaltung der Stütze **10** mit einem Befestigungs-/Verriegelungsaufsatz **30.** Der Befestigungs-/Verriegelungsaufsatz **30** umgreift teilweise den oberen Bereich der Spurrolle **15.** Er weist neben einem Mittelbereich zwei vertikale nach unten ragende Schenkel **30a** auf die dort einen symmetrischen Ausschnitt 30b besitzen und formschlüssig in Nuten **14a** der Achse **14** sitzen. Bei der Vormontage der Baugruppe des Fußbereichs der Stütze **10** sitzt der Befestigungs-/Verriegelungsaufsatz **30** mit seinem Mittelbereich auf der Spurrolle **15,** wobei die Zugfedern **25,** nach deren Einhängen in den Halte-/Einführlaschen **27** der Fußplatte **16,** in Aufnahmen **30c** des Befestigungs-/Verriegelungsaufsatzes **30** vorgespannt einzuhängen sind. Die vormontierte Baugruppe des Fußbereichs wird durch die Achse **14,** welche nach Anheben des Befestigungs-/Verriegelungsaufsatzes **30** eingeführt ist, getragen. Zum Anheben des Befestigungs-/Sicherungsaufsatzes **30** sind eine Hilfsöffnung **12a** im Stützeninnerohr **12** und zwei Eingriffsschlitze 30d im Befestigungs-/Verriegelungsaufsatz **30** vorgesehen, in die beispielsweise ein Schraubendreher zur Benutzung als Hebel eingeführt werden kann. Die Schenkel **30a** des Befestigungs-/Verriegelungsaufsatzes **30** rasten mit Randbereichen ihrer Ausschnitte **30b** in Radialnuten **14a** der Achse **14** ein, wodurch eine formschlüssige Sicherung der Achse 14 besteht, welche ein Herauswandern aus ihrer Lagerung verhindert. Die Endsicherung der Achse **14,** zwecks Demontage, erfolgt wiederum durch hebelndes Anheben des Befestigungs-/Verriegelungsaufsatzes **30,** wie oben beschrieben, wobei die Achse **14** herausschiebbar ist.

### Bezugszeichenliste

- **10**: Stütze
- **11**: Stützenaußenrohr
- **12**: Stützeninnenrohr
- **12a**: Hilfsöffnung
- **13**: Lagergehäuse
- **14**: Achse
- **14a**: Radialnut
- **15**: Spurrolle
- **16**: Fußplatte
- **17**: Spurrille
- **18**: Rollspur
- **19**: Verstärkungsrippe
- **20**: Fortsatz
- **21**: Anschlagfläche
- **22**: Stopper
- **23**: Haltezapfen
- **24**: Halteeinrichtung
- **25**: Zugfeder
- **26**: Halterung
- **27**: Halte-/Einführlasche.
- **27a**: Einführfase
- **28**: Aussparung
- **29**: Umlenkkufe
- **30**: Befestigungs-/Verriegelungsaufsatz
- **30a**: Schenkel
- **30b**: Ausschnitt
- **30c**: Aufnahme
- **30d**: Eingriffsschlitz

## Patentansprüche

1. Höhenverstellbare Stütze für Sattelanhänger, bei der am unteren Ende des ausfahrbaren Stützenteils eine Fußplatte, auf der sich ein Rollelement, abwälzt, angeordnet ist und Rückstellmittel die Fußplatte nach erfolgtem Ausgleichshub und Anheben der Stütze in die symmetrisch zur Längsachse verlaufende Grundstellung zurückziehen und in dieser Lage die Fußplatte gegen das Rollelement halten, und die Fußplatte **(16)** an Zugfedern **(25)** hängt, welche in zwei parallelen Ebenen angeordnet sind und mit jeweils einer Öse im Stützeninnenrohr **(12)** befestigt sind, wobei für das Stützeninnenrohr **(12)** und die Fußplatte **(16)** eine Anschlageinrichtung vorhanden ist, **dadurch gekennzeichnet, daß** die Zugfedern **(25)** jeweils in zwei, zwischen einer Spurrolle **(15)** und der Wandung des Stützeninnenrohres **(12)** liegenden Ebenen angeordnet sind und mit ihrer anderen Öse unmittelbar unterhalb des Stützeninnenrohres **(12)** an der Fußplatte **(16)** befestigt sind, und daß die Stütze **(10)** eine Halteeinrichtung **(24)** besitzt, über die sich die Fußplatte **(16)** und das Stützeninnenrohr **(12)** verhaken können.

2. Stütze nach Anspruch 1, **dadurch gekennzeichnet, daß** die Anschlageinrichtung aus einem Paar mittensymetrischer Fortsätze **(20),** die jeweils, von der linken und der rechten Außenfläche des Stützeninnenrohres **(12)** aus, eingerückte Anschlagflächen **(21)** aufweisen und Stoppern **(22),** welche auf der Fußplatte **(16)** sitzen besteht, gegen die bei maximalem Ausgleichswegen die Anschlagflächen **(21)** des Stützeninnenrohres **(12)** anschlagen.

3. Stütze nach Anspruch 1, **dadurch gekennzeichnet, daß** die Halteeinrichtung **(24)** aus Tragrändern **(19a),** die sich an den Verstärkungsrippen **(19)** der Fußplatte **(16)** befinden und Haltezapfen **(23)** die am Stützeninnenrohr **(12)** sitzen, besteht.

4. Stütze nach Anspruch 3, **dadurch gekennzeichnet, daß** die Haltezapfen **(23)** zu den Verstärkungsrippen **(19)** und deren Tragrändern **(19a)** seitlich und höhenmäßig so angeordnet sind, daß sie im Regelfall beabstandet sind, damit die Fußplatte **(16)** sowohl um ihre Längsachse als auch um ihre Querachse schwenkbeweglich ist und sich nur im Notfall mit den Haltezapfen **(24)** am Stützeninnenrohr **(12)** verhakt und nicht verloren gehen kann.

5. Stütze nach Anspruch 1, **dadurch gekennzeichnet, daß** die in das Stützeninnenrohr **(12)** eingebaute Spurrolle **(15)** am Umfang eine konkave Spurrille **(17)** besitzt und daß die Fußplatte **(16)** eine dazu komplementäre konvex ausgebildete Rollspur **(18)** aufweist.

6. Stütze nach Anspruch 1, **dadurch gekennzeichnet, daß** im Stützeninnenrohr **(12)** Umlenkkufen **(29)** für die Zugfedern **(25)** vorgesehen sind.

7. Stütze nach Anspruch 6, **dadurch gekennzeichnet, daß** die Umlenkkufen **(29)** von entsprechend geprägten Wandbereichen des Stützeinnenrohres **(12)** gebildet werden.

8. Stütze nach Anspruch 1, **dadurch gekennzeichnet, daß** die Halterung **(26)** für die Zugfedern **(25)** mindestens einen Rundstab aufweist.

9. Stütze nach Anspruch 1, **dadurch gekennzeichnet, daß** am unteren Rand des Stützeninnenrohres **(12)** Aussparungen **(28)** vorhanden sind.

10. Stütze nach Anspruch 1, **dadurch gekennzeichnet, daß** die Zugfedern **(25)** im Stützeninnenrohr unmittelbar an einem Befestigungs-/Verriegelungsaufsatz **(30)** befestigt sind.

11. Stütze nach Anspruch 10, **dadurch gekennzeichnet, daß** der Befestigungs-/Verriegelungsaufsatz **(30)** auf der Achse **(14)** sitzt.

12. Stütze nach Anspruch 10, **dadurch gekennzeichnet, daß** der Befestigungs-/Verriegelungsaufsatz **(30)** auf der Spurrolle **(15)** sitzt.

13. Stütze nach Anspruch 10, **dadurch gekennzeichnet, daß** der Befestigungs-/Verriegelungsaufsatz **(30)** zwei vertikal nach unten ragende Schenkel **(30a)** aufweist.

14. Stütze nach Anspruch 13, **dadurch gekennzeichnet, daß** der Befestigungs-/Verriegelungsaufsatz **(30)** zwei weitere, zu den Schenkeln **(30a)** um 90° versetzte und seitlich abstehende Schenkel als Aufnahmen **(30c)** zum Einhängen der Zugfedern **(25)** besitzt.

15. Stütze nach Anspruch 1, **dadurch gekennzeichnet, daß** die Achse **(14)** mindestens eine Radialnut **(14a)** aufweist.

16. Stütze nach Anspruch 13, **dadurch gekennzeichnet, daß** sich an den Schenkeln **(30a)** des Befestigungs-/Verriegelungsaufsatzes **(30)** Ausschnitte **(30b)** befinden, deren Teilrandbereiche formschlüssig in die Radialnuten **(14a)** der Achse **(14)** einrasten.

17. Stütze nach Anspruch 13, **dadurch gekennzeichnet, daß** im Stützeninnenrohr **(12)** mindestens eine Hilfsöffnung **(12a)** und im Befestigungs-/Verriegelungsaufsatz **(30)** mindestens ein Eingriffsschlitz **(30d)** vorhanden sind.

## Claims

1. Height-adjustable support for semitrailers, in which a base plate, on which a rolling element rolls, is arranged at the lower end of the extendable support part, and, after a compensating stroke has taken place and the support has been raised, resetting means draw the base plate back into the basic position running symmetrically with respect to the longitudinal axis and, in this position, hold the base plate against the rolling element, and the base plate (16) hangs on tension springs (25) which are arranged in two parallel planes and are fastened by a respective eye in the inner support tube (12), there being a stop device for the inner support tube (12) and the base plate (16), **characterized in that** the tension springs (25) are each arranged in two planes, which are located between a track roller (15) and the wall of the inner support tube (12), and are fastened by their other eye directly below the inner support tube (12) to the base plate (16), and **in that** the support (10) has a holding device (24) via which the base plate (16) and the inner support tube (12) can interlock.

2. Support according to Claim 1, **characterized in that** the stop device comprises a pair of centrally symmetrical extensions (20) which each have stop surfaces (21) which are indented from the left and the right outer surface of the inner support tube (12), and stoppers (22) which sit on the base plate (16) and against which the stop surfaces (21) of the inner support tube (12) strike at maximum compensating distances.

3. Support according to Claim 1, **characterized in that** the holding device (24) comprises supporting edges (19a), which are located on the reinforcing ribs (19) of the base plate (16), and holding pins (23) which sit on the inner support tube (12).

4. Support according to Claim 3, **characterized in that** the holding pins (23) are arranged laterally and in terms of height with respect to the reinforcing ribs (19) and the supporting edges (19a) thereof in such a manner that they are normally spaced apart, so that the base plate (16) is pivotable both about its longitudinal axis and about its transverse axis and, only in the event of an emergency, interlocks with the holding pins (23) on the inner support tube (12) and cannot be lost.

5. Support according to Claim 1, **characterized in that** the track roller (15) which is installed in the inner support tube (12) has a concave track groove (17) on the circumference, and **in that** the base plate (16) has a rolling track (18) which is complementary thereto and is of convex design.

6. Support according to Claim 1, **characterized in that** deflecting runners (29) for the tension springs (25) are provided in the inner support tube (12).

7. Support according to Claim 6, **characterized in that** the deflecting runners (29) are formed by appropriately embossed wall regions of the inner support tube (12).

8. Support according to Claim 1, **characterized in that** the mount (26) for the tension springs (25) has at least one round bar.

9. Support according to Claim 1, **characterized in that** there are recesses (28) on the lower edge of the inner support tube (12).

10. Support according to Claim 1, **characterized in that** the tension springs (25) are fastened in the inner support tube directly to a fastening/locking attachment (30).

11. Support according to Claim 10, **characterized in that** the fastening/locking attachment (30) sits on the spindle (14).

12. Support according to Claim 10, **characterized in that** the fastening/locking attachment (30) sits on the track roller (15).

13. Support according to Claim 10, **characterized in that** the fastening/locking attachment (30) has two limbs (30a) protruding vertically downwards.

14. Support according to Claim 13, **characterized in that** the fastening/locking attachment (30) has two further limbs, which are offset by 90° with respect to the limbs (30a) and protrude laterally, as receptacles (30c) for the attachment of the tension springs (25).

15. Support according to Claim 1, **characterized in that** the spindle (14) has at least one radial groove (14a).

16. Support according to Claim 13, **characterized in that** there are cutouts (30b) on the limbs (30a) of the fastening/locking attachment (30), the partial edge regions of which cutouts latch into the radial grooves (14a) of the spindle (14) in an interlocking manner.

17. Support according to Claim 13, **characterized in that** there is at least one auxiliary opening (12a) in the inner support tube (12) and at least one engagement slot (30d) in the fastening/locking attachment (30).

## Revendications

1. Support réglable en hauteur pour semi-remorque, dans lequel, à l'extrémité inférieure de la partie de support déployable est disposée une plaque de base sur laquelle roule un élément de roulement, et des moyens de rappel ramènent la plaque de base dans la position de base s'étendant symétriquement par rapport à l'axe longitudinal après que la course de compensation et le soulèvement du support ont été réalisés et maintiennent dans cette position la plaque de base contre l'élément roulant, et la plaque de base (16) est accrochée à des ressorts de traction (25) qui sont disposés dans deux plans parallèles et qui sont fixés avec un anneau respectif dans le tube interne de support (12), un dispositif de butée étant prévu pour le tube interne de support (12) et pour la plaque de base (16), **caractérisé en ce que** les ressorts de traction (25) sont à chaque fois fixés dans deux plans situés entre un galet-guide (15) et la paroi du tube interne de support (12) et sont fixés avec leur autre anneau directement en dessous du tube interne de support (12) à la plaque de base (16), et **en ce que** le support (10) possède un dispositif de retenue (24) par le biais duquel la plaque de base (16) et le tube interne de support (12) peuvent s'accrocher.

2. Support selon la revendication 1, **caractérisé en ce que** le dispositif de butée se compose d'une paire de projections à symétrie centrale (20), qui présentent chacune des surfaces de butée (21) en retrait depuis les surfaces extérieures gauche et droite du tube interne de support (12) et de blocs (22) qui reposent sur la plaque de base (16), contre lesquels les surfaces de butée (21) du tube interne de support (12) viennent buter en cas de courses de compensation maximales.

3. Support selon la revendication 1, **caractérisé en ce que** le dispositif de retenue (24) se compose de bords de support (19a) qui se trouvent sur les nervures de renforcement (19) de la plaque de base (16) et de tourillons de retenue (23) qui reposent sur le tube interne de support (12).

4. Support selon la revendication 3, **caractérisé en ce que** les tourillons de retenue (23) sont disposés latéralement par rapport aux nervures de renforcement (19) et à leurs bords de support (19a) et en hauteur de telle sorte qu'ils soient généralement espacés afin que la plaque de base (16) puisse pivoter à la fois autour de son axe longitudinal et autour de son axe transversal et qu'elle s'accroche uniquement en cas d'urgence avec les tourillons de retenue (23) avec le tube interne de support (12) et ne puisse donc pas être perdue.

5. Support selon la revendication 1, **caractérisé en ce que** le galet-guide (15) intégré dans le tube interne de support (12) possède sur sa périphérie une gorge de guidage concave (17) et **en ce que** la plaque de base (16) présente un guide de roulement (18) de forme convexe complémentaire à celle-ci.

6. Support selon la revendication 1, **caractérisé en ce que** des patins de déviation (29) sont prévus dans le tube interne de support (12) pour les ressorts de traction (25).

7. Support selon la revendication 6, **caractérisé en ce que** les patins de déviation (29) sont formés par des régions de paroi du tube interne de support (12) gaufrées de manière correspondante.

8. Support selon la revendication 1, **caractérisé en ce que** la fixation (26) pour les ressorts de traction (25) présente au moins une barre ronde.

9. Support selon la revendication 1, **caractérisé en ce que** des évidements (28) sont prévus au bord inférieur du tube interne de support (12).

10. Support selon la revendication 1, **caractérisé en ce que** les ressorts de traction (25) sont fixés dans le tube interne de support directement sur un chapeau de fixation/verrouillage (30).

11. Support selon la revendication 10, **caractérisé en ce que** le chapeau de fixation/verrouillage (30) repose sur l'axe (14).

12. Support selon la revendication 10, **caractérisé en ce que** le chapeau de fixation/verrouillage (30) repose sur le galet-guide (15).

13. Support selon la revendication 10, **caractérisé en ce que** le chapeau de fixation/verrouillage (30) présente deux branches (30a) saillant verticalement vers le bas.

14. Support selon la revendication 13, **caractérisé en ce que** le chapeau de fixation/verrouillage (30) présente deux autres branches décalées de 90° par rapport aux branches (30a) et saillant latéralement, servant de logements (30c) pour accrocher les ressorts de traction (25).

15. Support selon la revendication 1, **caractérisé en ce que** l'axe (14) présente au moins une rainure radiale (14a).

16. Support selon la revendication 13, **caractérisé en ce que** des portions (30b) se trouvent sur les branches (30a) du chapeau de fixation/verrouillage (30), leurs régions de bord partielles s'encliquetant par engagement positif dans les rainures radiales (14a) de l'axe (14).

17. Support selon la revendication 13, **caractérisé en ce qu'**au moins une ouverture auxiliaire (12a) est prévue dans le tube interne de support (12) et au moins une fente d'engagement (30d) est prévue dans le chapeau de fixation/verrouillage (30).
